(19) Europäisches Patentamt
European Patent Office
Office européen des brevets

(11) **EP 2 485 981 B1**

## (12) EUROPEAN PATENT SPECIFICATION

(45) Date of publication and mention
of the grant of the patent:
**27.04.2016 Bulletin 2016/17**

(51) Int Cl.:
***C02F 1/00*** *(2006.01)*  ***B01D 21/00*** *(2006.01)*
***C02F 1/44*** *(2006.01)*

(21) Application number: **10771501.3**

(86) International application number:
**PCT/GB2010/001886**

(22) Date of filing: **08.10.2010**

(87) International publication number:
**WO 2011/042704 (14.04.2011 Gazette 2011/15)**

(54) **USE OF A MULTI LAYERED PARTICULATE FILTER FOR REDUCING THE TURBIDITY AND SDI OF WATER**

VERWENDUNG EINES MEHRLAGIGEN PARTIKELFILTERS FÜR VERMINDERTE TRÜBUNG UND SDI EINES WASSERFILTERS

UTILISATION D'UN FILTRE PARTICULAIRE MULTICOUCHE POUR RÉDUIRE LA TURBIDITÉ ET LE SDI D'UNE EAU FILTRÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.10.2009 GB 0917632**
**19.12.2009 GC P200914956**

(43) Date of publication of application:
**15.08.2012 Bulletin 2012/33**

(73) Proprietor: **Bluewater Filter Clear Limited**
**London**
**W1W 1QY (GB)**

(72) Inventors:
- **HOLMES, Nicolas**
  **Kirkintilloch**
  **Glasgow G66 3PA (GB)**
- **MARSHALL, Thomas**
  **Gartcosh**
  **Glasgow G69 8EB (GB)**

(74) Representative: **Gibbs, Richard et al**
**Marks & Clerk LLP**
**Atholl Exchange**
**6 Canning Street**
**Edinburgh EH3 8EG (GB)**

(56) References cited:
**EP-A1- 0 521 429    US-A- 4 747 945**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to water treatment, more precisely to the use of a multi-layered particulate filter for reducing the turbidity and the Silt Density Index of water, for pre-treating water to be subjected to a process comprising reverse osmosis.

BACKGROUND OF THE INVENTION

Water, particularly water from sources such as oceans, rivers, reservoirs and lakes, typically contains impurities (for example suspended, dissolved or colloidal material) which must be removed before the water is suitable for human consumption or for further processing via, for example, reverse osmosis.

Reverse osmosis utilises membranes which are particularly sensitive to impurities present in water and can quickly foul. Water exhibiting high levels or turbidity (as denoted in nephelometric turbidity units) or water having a high silt density index (SDI) causes rapid RO membrane fouling. The silt density index is a measure of the fouling capacity of water in reverse osmosis (RO) systems. Generally, RO systems fed with water having a low SDI will experience less membrane fouling than systems fed with water having a high SDI. For example, water having an SDI > 5 will typically foul a reverse osmosis membrane within about 1 - 3 months while water with an SDI < 3 will foul a reverse osmosis membrane within about 12 months.

In order to reduce levels of membrane fouling, water to be subjected to RO (otherwise known as "feed water"), may be pre-treated to reduce the presence of suspended, dissolved or colloidal impurities the turbidity and the SDI.

Dual media filters comprising anthracite and sand are commonly used to pre-treat water. In filters of this type, the lower density of the anthracite allows coarser grains to remain stable on top of the finer grains of sand. An arrangement of this type allows a greater quantity of floc to be accommodated within the anthracite and has a greater clean bed voidage giving a higher dirt loading capacity. However, dual media filters can only provide a filtered water turbidity of approximately 5 ntu which is too high to be used in a reverse osmosis unit. As such, additional chemical treatment is often required before water filtered using dual media apparatus can be fed into reverse osmosis systems.

Chemical treatment typically involves the use or inorganic coagulants and polymeric flocculants to neutralise the often negatively charged water borne impurities. Many of these chemicals, under the appropriate pH, temperature and salinity conditions, react with water impurities to form insoluble hydroxides which, on precipitation, link together to form long chains or meshes, causing small particles to agglomerate into larger flocs. Van der Waals forces and polymeric coagulants complete the process, forming larger aggregates which can be further flocculated or separated from the waste stream by filtration. Commonly used coagulants include ferrous chloride ($FeCl_2$), ferric chloride ($FeCl_3$), ferrous sulphate ($Fe(SO_4)$), aluminium sulphate ($Al_2(SO_4)_3$) and poly aluminium chloride (PAC).

In addition to the use of inorganic coagulants, chemical treatments may further include the use of organic flocculants which may take the form of anionic, cationic and non-ionic linear and branched polymers. Typically, a low molecular weight cationic polymer is used in conjunction with an inorganic coagulant such as, for example, aluminium sulphate, to generate "pinflocs", this is usually followed by the addition of high molecular weight anionic polymers generating bigger flocs. These larger flocs are removed by sedimentation followed by dual media filtration.

Dual media filtration systems such as those described above may be further supplemented with the use of rapid gravity filtration (RGF). RGF type filters are particularly effective when combined with chemical treatments and have a much higher flow rate (typically 4-8 $m^3/m^2$/hour) and thus a smaller footprint. However, the high flow rate prevents biodegradation and water filtered in this way can require disinfection due to a high microbial content.

Even with RGF systems (which comprise dual media beds comprising anthracite and sand), the use of chemicals (for example ferric salts) is required to achieve SDI values of less than 3 as required by RO manufactures.

Membrane microfiltration techniques may also be used. Essentially, microfiltration involves passing fluids through microporous membranes having a pore size in the range of 0.1 - 10 $\mu$m. However, in order to remove organic material, iron and manganese ions, further chemical conditioning of the water is required. Furthermore, microfiltration techniques are plagued by scaling and bio-fouling problems and polysaccharides produced by algae present in seawater create flow and fouling issues.

The document US4747945 to Kreusch et al. gives an example of a filter known from the prior art.

SUMMARY OF INVENTION

The present invention is based on the finding that certain water treatment systems are particularly effective at reducing the turbidity and silt density index (SDI) of water. In particular, the water treatment systems described herein may be used or exploited in methods to ensure that water fed into, for example, reverse osmosis systems, contains significantly reduced levels of impurities which foul the filtration membranes.

As such, a first aspect of this invention provides the use of a water treatment system comprising a filter bed comprising layers of inert particulate material, according to claims 1 to 10. The inventors have discovered that although the membranes of RO systems are prone to continual fouling through the presence of impurities, pre-treating RO feed water using the water treatment systems described in the first aspect of this invention, significantly reduces instances of RO membrane fouling. As such, the first aspect of this invention may further provide a means of improving the operational efficiency, yield and/or longevity of a reverse osmosis system and/or the membranes thereof

Without wishing to be bound by theory, the reduced instance of RO membrane fouling stems from the fact that water processed in accordance with the first aspect of this invention has a silt density index (SDI) of less than 5, preferably less than 4 and even more preferably less than 3. Water having an SDI within these ranges may be fed directly into a reverse osmosis system whereas water exhibiting an SDI of greater than 5 must be subjected to further (possibly chemical) treatment. Moreover, the inventors hypothesise that the reduced incidence of RO membrane fouling is brought about (at least in part) by the mechanical retention of suspended solids by the layers of inert particulate material and the adsorption of negatively charged pathogens and microorganisms down to, approximately, 0.2 microns.

Uses according to the first aspect of this invention, may significantly reduce the turbidity and SDI of, for example, seawater or water obtained from rivers, lakes or reservoirs. As such, water from these sources, treated in accordance with the first aspect of this invention, may be fed directly into a RO system without need for further treatment. Moreover, the use of the water treatment systems described herein removes the need for supplemental chemical treatments which themselves can lead to RO membrane fouling.

In one embodiment, the first aspect of this invention may be used as a means of pre-treating water to be subjected to, or fed into, a reverse osmosis (RO) system or process.

An exemplary water treatment system is described in GB2369069.The layers of inert particulate material comprise in succession:

A first top layer of particulate material comprising particles with a density in the range of 1.25 to 1.55 g/cc and within the size range of 1.6mm to 2.5mm;

A second layer of particulate material comprising particles with a density in the range of 2.35 to 2.95 g/cc and within the size range of 0.5mm to 0.85mm;

A third layer of particulate material comprising particles with a density in the range of 3.5 to 4.3 g/cc and within the size range of 0.2mm to 0.6mm; and

A fourth, bottom layer of particulate material comprising particles with a density in the range of 4.0 to 6.0 g/cc and within the size range of 0.2mm to 0.5mm.

Advantageously the particulate materials selected for each layer will, in general, have good sphericity. Thus, the shape factor of the particles in each of the first, second and third layers may be at least 0.6 and the shape factor of the particles comprising the fourth layer may be at least 0.5 and in certain embodiments at least 0.55. It should be understood that the term "shape factor" relates to the degree of sphericity where a value of unity corresponds to a sphere.

By selecting particles possessing good sphericity, it is possible to ensure that the resulting water treatment system exhibits substantially uniform growth/accumulation of bio-species and effective filtration and back washing.

In one embodiment, the shape factor of the particles in any one or more of the first, second and third layers may be at least about 0.65. Furthermore, the shape factor of the particles in the fourth layer may be at least about 0.6.

Advantageously, the particle size and density of the particulate material forming each layer is such that the free fall settling rate of the particles decreases from the top layer downwards. The difference in free fall settling rate may be at least 20% from one layer to the next and in some embodiments, the free fall settling rate may be at least 25%. The free fall settling velocity may be determined by, for example, allowing 20 individual particles to fall under gravity past two calibration marks on a transparent vertical tube filled with water maintained at a temperature of 20°C, the tube being 70 millimetres inside diameter and 1 metre in length. The upper calibration mark is located 150 millimetres from the top of the tube and the lower mark, 650 millimetres from the top. The particles are first thoroughly wetted with water and then released under water within the tube, the time taken to fall the known distance between the calibration marks being measured and used to calculate the free fall velocity.

In one embodiment, particles comprising the first layer may have a density in the range of 1.35 - 1.47 g/cc.

Particles comprising the second layer may have a density in the range of 2.6-2.8 g/cc.

Particles comprising the third layer may have a density in the range of 3.7-4.1 g/cc.

Particles comprising the fourth layer may have a density in the range of 4.7-5.2 g/cc.

One of skill in this field will appreciate that the term "density" refers to the density of the particulate material including porosity present in the particles.

In a further embodiment, particles comprising the first layer may have a particle size within the range of 1.7 - 2.4 millimetres.

Particles comprising the second layer may have a particle size within the range of 0.6 - 0.85 millimetres.

Particles comprising the third layer may have a particle size within the range of 0.4 - 0.5 millimetres.

Particles comprising the fourth layer may have a particle size within the range 0.3 - 0.4 millimetres.

One of skill in this field will appreciate that the term "particle size" means the particle size of the media determined by obtaining the geometrical mean size between two adjacent sieve sizes, the media in each case being sieved for periods of 15 minutes to ensure a substantially uniform size. For each media, the top sieve size corresponds to the large particle size of the ranges specified above for the corresponding media while the bottom sieve size equates to the smaller particle size. The 15 minute sieving operations are carried out using the top and bottom sieves together so as to capture the desired particle size range.

As stated, the particulate material is an "inert" particular material and the term "inert" should be taken to encompass particulate materials which do not chemically react with the water undergoing treatment.

In one embodiment, the water treatment system for use in the various aspects of this invention may comprise particulate material which is porous.

In one embodiment, the particulate material forming the first layer may be selected from the group comprising anthracite, glass, cinders, activated carbon and mixtures of two or more of these materials. Advantageously, the first layer comprises anthracite particles. The particulate material forming the second layer may be selected from the group comprising crushed flint, silica, quartz and mixtures of two or more of these materials. Advantageously, the second layer comprises crushed flint. The third layer may comprise a particulate material selected from the group consisting of garnet, alumina (preferably calcined alumina), stone, granite, brick, porcelain and mixtures of two or more of these materials. Advantageously, the third layer comprises calcined alumina.

The particulate material comprising the fourth layer may be magnetite and/or ilmenite.

In one embodiment, layers which comprise anthracite may comprise anthracite coal comprising approximately 90% carbon, approximately 5% ash and approximately 7% volatile compounds. Additionally, or alternatively, layers which comprise crushed flint may comprise approximately 96.89% silica ($SIO_2$), approximately 0.24% Alumina ($Al_2O_3$), approximately 0.42% Iron(III) oxide ($Fe_2O_3$), approximately 0.83% (CaO) and approximately 0.1% Magnesium Oxide (MgO). Advantageously, layers which comprise calcined alumina comprise Aluminium oxide CAS 1344-28-1 (ELINCS/EINECS) 215-691-6. Layers which comprise magnetite, may comprise the compound known as Magnachem 400s (natural mineral $Fe_3O_4$).

To allow efficient back washing and also to secure consistent capture of particulate matter from the water undergoing treatment, each of said layers of the filter bed will have similar voidages and the particles thereof will have similar degrees of porosity from one layer to the next.

Suitable water treatment systems also include the Spruce Filter ™ produced by Filter Clear, Limited.

As such, one embodiment of this invention provides the use of the water treatment system described in GB2369069 or GB2388557 (or the Spruce Filter™) for reducing the turbidity and/or SDI of water and/or for pre-treating water to be subjected to a reverse osmosis (RO) process. More specifically, the water treatment system described in GB2369069 or GB2388557 (or the Spruce Filter™) may be used to pre-treat water so as to reduce instances of membrane fouling.

One of skill in this field will appreciate that reverse osmosis procedures are prevalent in a number of water treatment processes including, for example those processes which generate or improve the quality of, water for human consumption. Such processes may include desalination, where potable water is generated from seawater. As such, in one embodiment, the RO system to be fed with water pre-treated in accordance with this invention, may be part of a desalination system or process.

Disclosed herein is a method of pre-treating water to be subjected to a reverse osmosis (RO) process, said method comprising the step of passing water through (or treating with) the water treatment system described above.

The method reduces the turbidity and/or SDI of water, such that it may be fed (directly) into a reverse osmosis system, without need for further treatment.

Disclosed herein is a method of reducing membrane fouling in reverse osmosis systems, said method comprising pre-treating feed water with the water treatment systems described herein (for example the system described in GB2369069, GB2388557 or the Spruce Filter™).

Further disclosed is the use of the water treatment system described herein (for example the system described in GB2369069, GB2388557 or the Spruce Filter™) for reducing membrane fouling in reverse osmosis systems.

In one embodiment, the water subjected to a reverse osmosis process, is obtained from a natural source such as, for example, the sea, lakes or rivers, etc.

In addition to substantially lowering the SDI of water, the inventors have discovered that the water treatment systems described herein are also able to reduce levels of other impurities such as chlorophyll and/or metal ions such as, for example, iron, aluminium and manganese, present in the water. Such contaminants further contribute to the fouling of RO membranes and are typically removed with the use of chemical agents. However residual levels of the chemicals which are used to reduce levels of metal ions can also contribute to membrane fouling. As such, the methods and uses described herein may also be exploited as a means of reducing the levels of metal ions present in water which is to be fed into, for example, a RO system or process.

In addition to using the water treatment system described herein as a means to reducing the turbidity and/or SDI of water already described, the inventors have observed that the water treatment system of this invention is able to run at significantly higher velocities that, for example, dual filters. By way of example, the water treatment system described herein may run at $60m^3/m^2hr$ plus. Additionally, the water treatment system provided by the invention may be operated with water at a temperature of 15°C and above. These features combines with the advantages and benefits already described, render the water treatment system described herein particularly suitable for pre-treating water to be fed into desalination apparatus, units or systems.

Disclosed herein is a desalination system comprising a water treatment system comprising a filter bed comprising layers of inert particulate material, such that, from the top layer to the bottom layer, the coarseness of the particles decreases while the density of the particulate material increases, said water treatment system pre-treating water for feeding into a reverse osmosis unit for desalination

Disclosed herein is a water treatment system as hereinbefore described in the description and drawings for use in reducing membrane fouling in reverse osmosis systems/apparatus.

The present invention will now be described in detail with reference to the following figures which show:

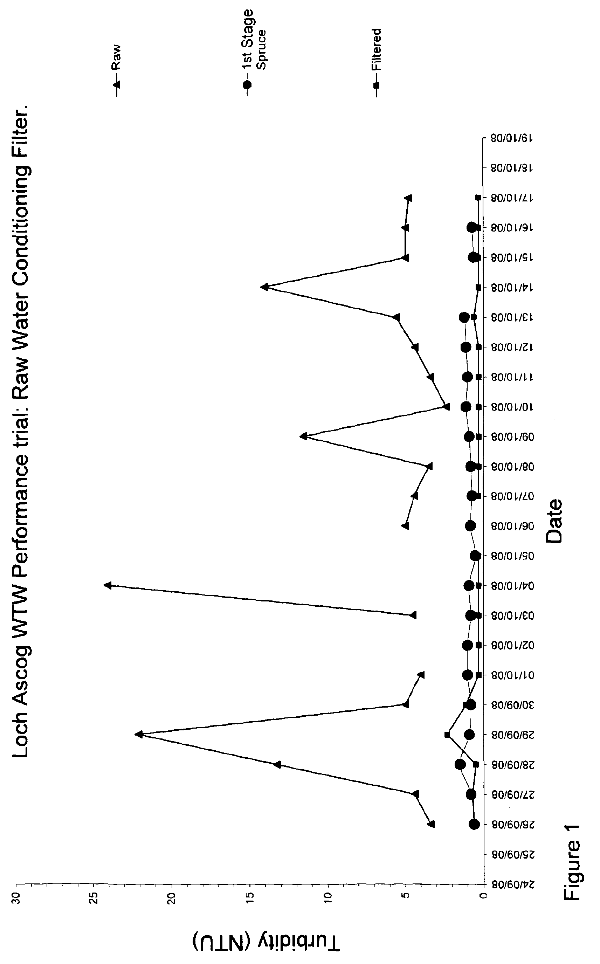

Figure 1: Graph showing the turbidity level before and after filtration with the present invention

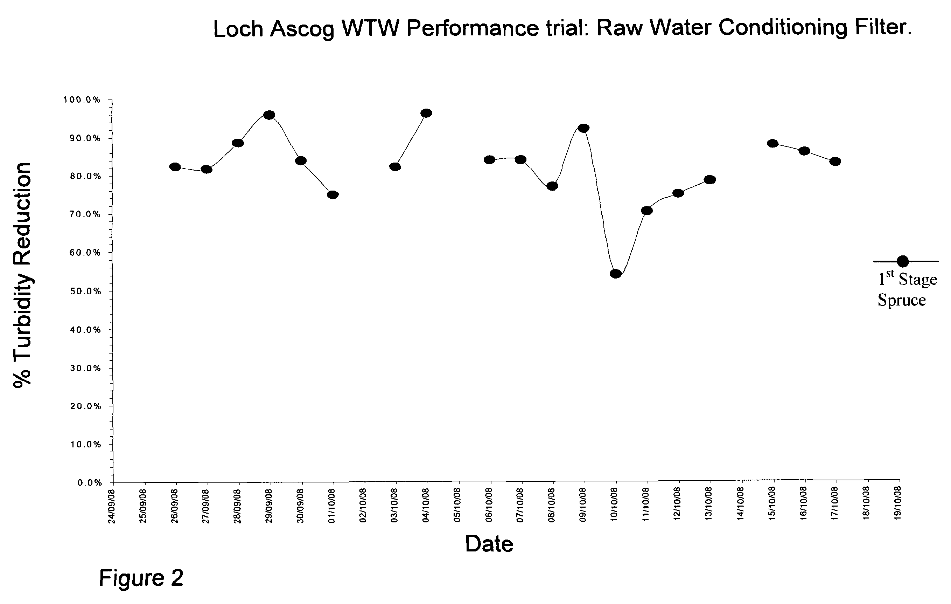

Figure 2: Graph showing the percentage reduction of turbidity using the present invention throughout the trial

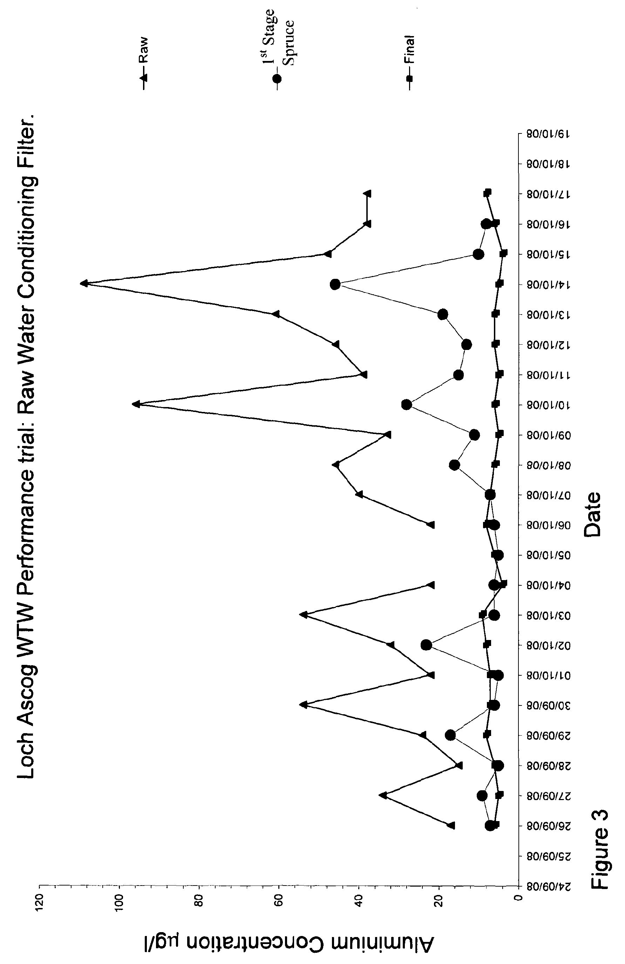

Figure 3: Graph showing the aluminium concentration levels before & after filtration with the present invention

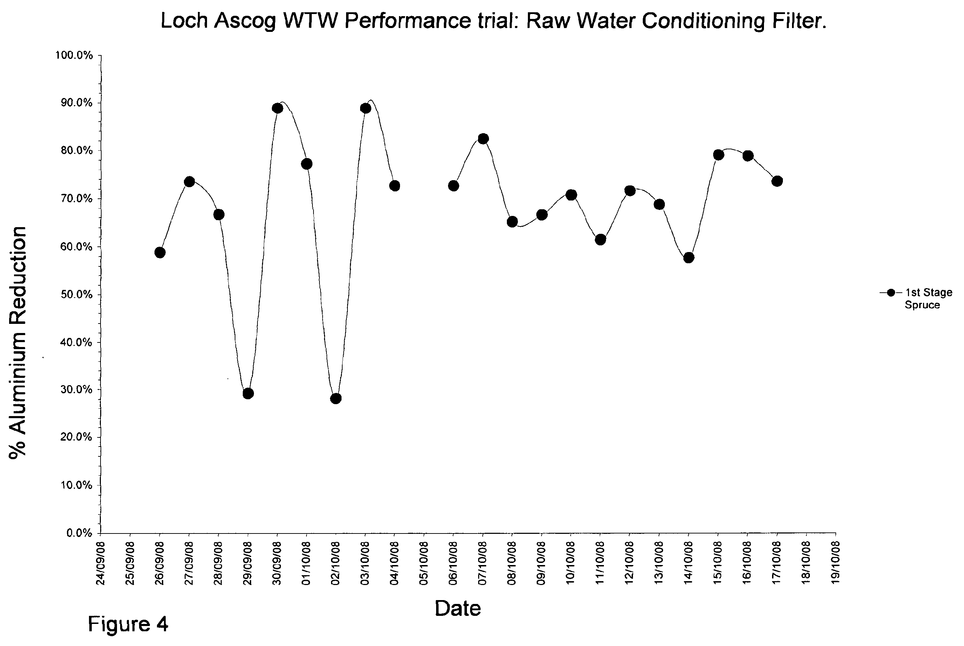

Figure 4: Graph showing the percentage of aluminium reduction throughout the trial using the present invention

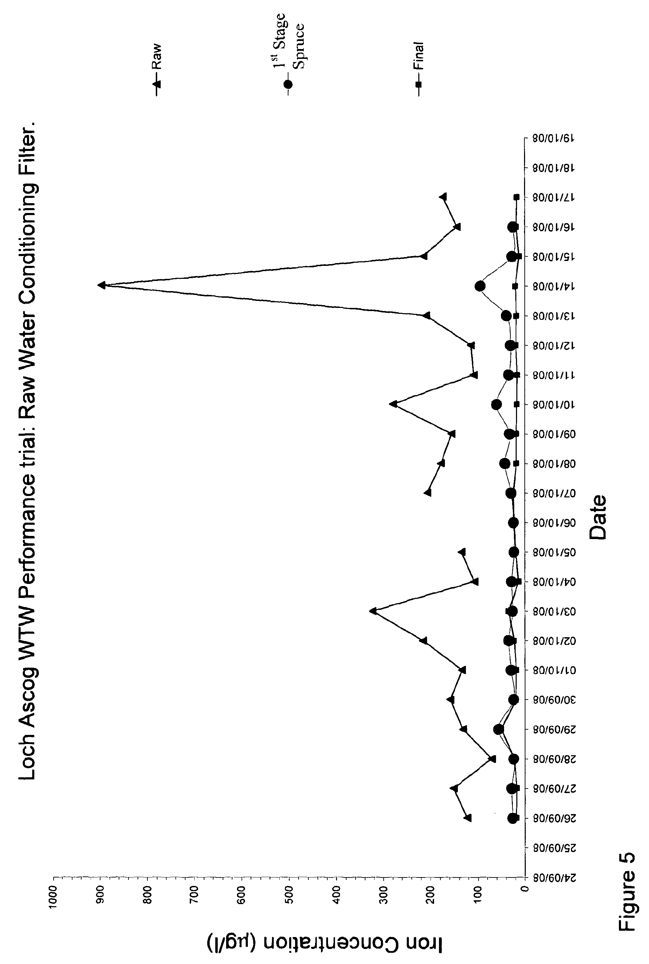

Figure 5: Graph showing the iron concentration levels before & after filtration with the present invention

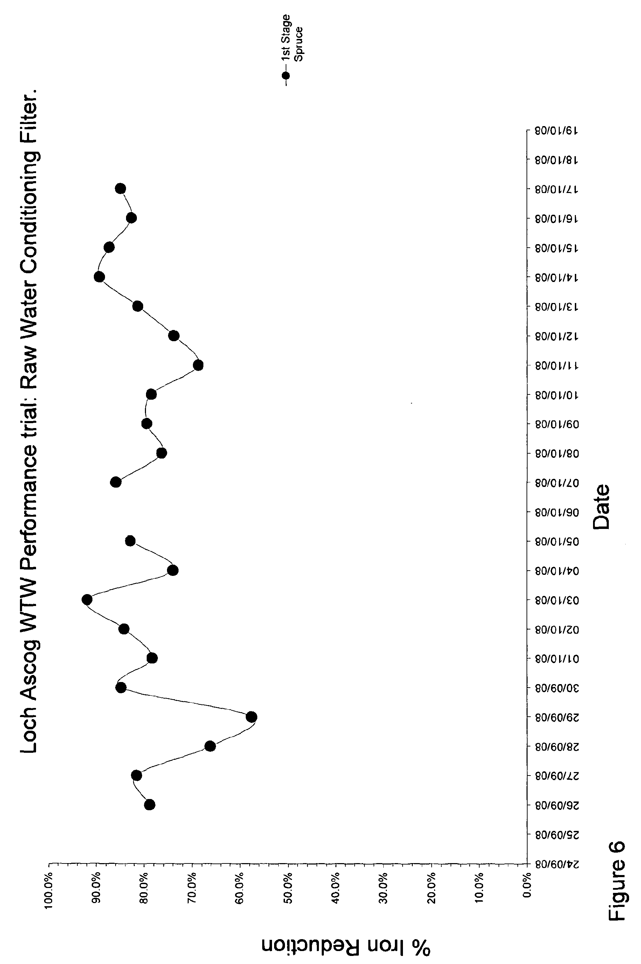

Figure 6: Graph showing the percentage of iron reduction throughout the trial using the present invention

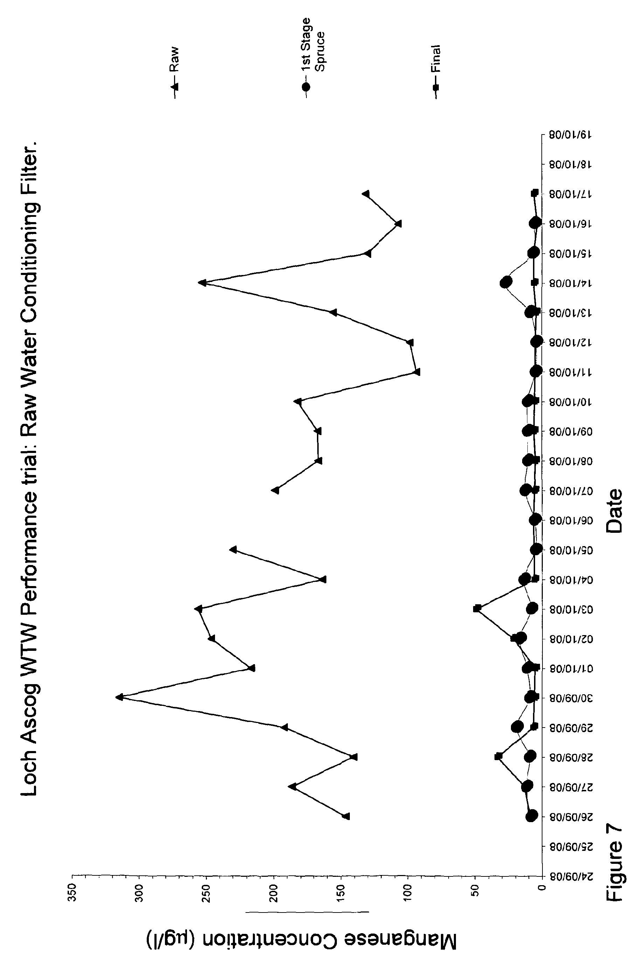

Figure 7: Graph showing the manganese concentration levels before & after filtration with the present invention

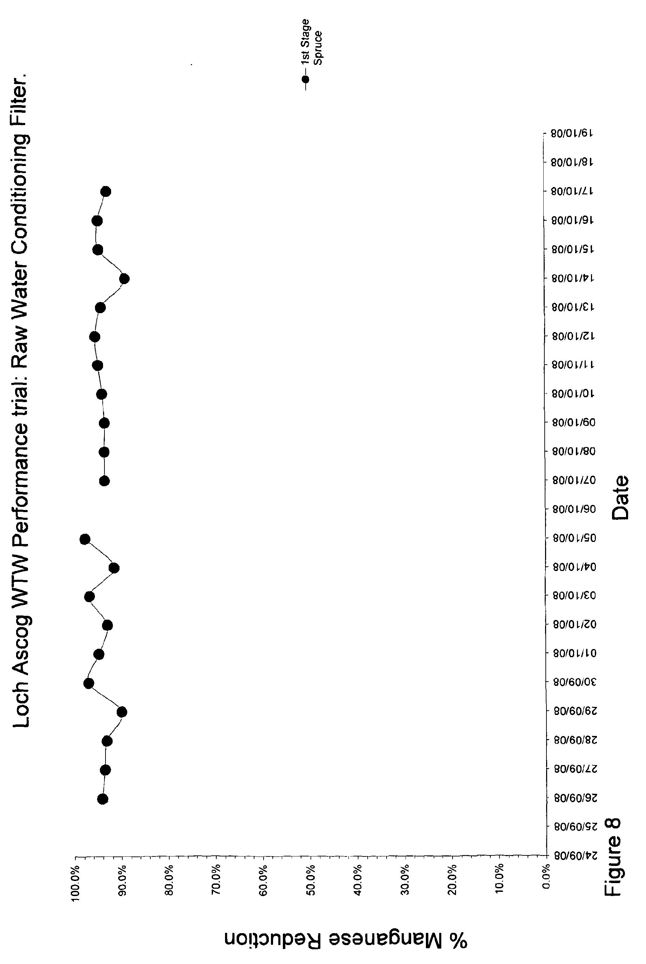

Figure 8: Graph showing the percentage of manganese reduction throughout the trial using the present invention

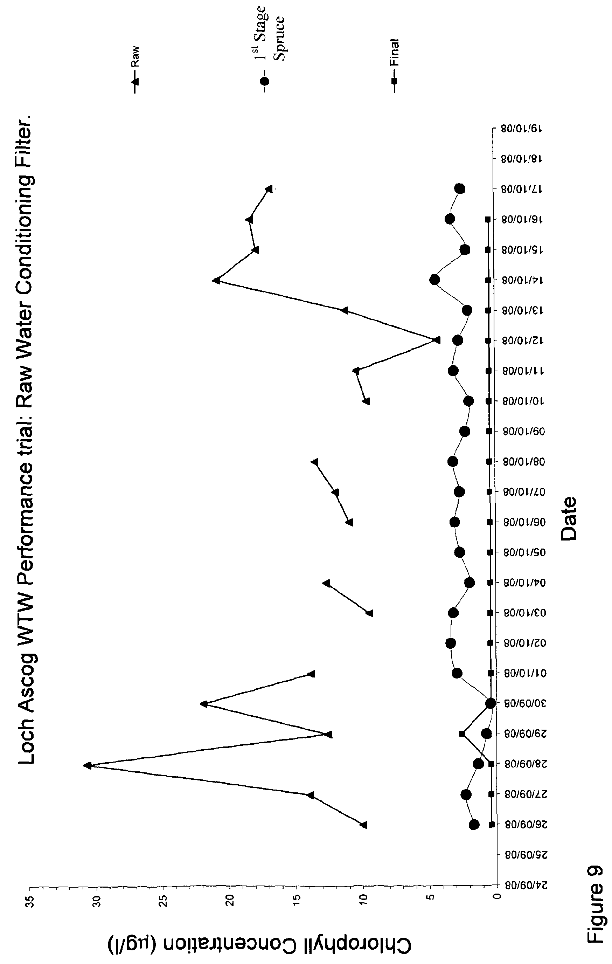

Figure 9: Graph showing the chlorophyll concentration levels before & after filtration with the present invention

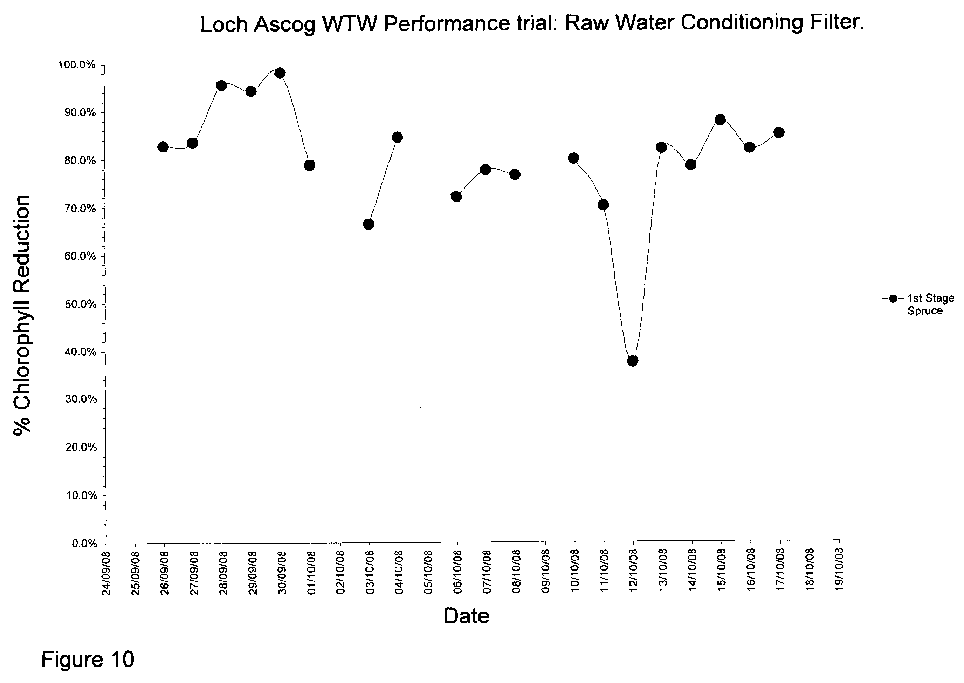

Figure 10: Graph showing the percentage of chlorophyll reduction throughout the trial using the present invention

**Methods**

Trials were carried out to assess the Spruce Filter's performance in determining the Silt Density Index value. This index is a guide to the fouling of membranes as used in the Reverse Osmosis practice in desalination.

Current practice is to use dual media filtration as pre-treatment with the addition of chemicals to achieve low SDI figures:

SDI level of > 5 means membranes will foul within 3 months
SDI level of < 3 means membrane will foul in 12 months

**Trials**

Period of test work was 14 working days using a containerized pilot plant. Flow rate was set at 10m3/hour and hourly samples taken.
A Silt Density Index test kit was used to determine the results.

**Test protocol**

Suspended solids and colloidal materials in feed water are one of the biggest problems in Reverse Osmosis systems. Even though most systems use pre-treated water, including, for example, water pre-treated by passage through 5 micron prefilters, fine particles are responsible for fouling the reverse osmosis membranes.

In order to have some measure of the degree of this fouling, a Silt Density Index system is used. A 0.45micron filter is exposed to the feed water under pressure of 30 psi and filtration rates are calculated

**Equipment**

- Containerised Spruce Filtration system
- A Millipore Filter pad holder with 0.45 micron filter disc attached to a needle valve.

- 500ml Graduated measuring cylinder.
- Stopwatch.
- Tweezers.

**Procedure**

1. Unbolt filter holder, wet it and place a 0.45micron filter on back plate using tweezers.
2. Place O ring properly and replace the top half of the filter holder and bolt together.
3. Connect apparatus to the feed water line in a vertical down flow position and open the needle valve.
4. Loosen two adjacent filter bolt holders and tilt apparatus to bleed out air, retighten bolts and adjust the pressure of the pressure reducing valve to 30psi while starting the stopwatch.
5. Immediately run the flow into a graduated measuring cylinder and measure time to collect 500ml. mark time T1 and keep watch running.
6. Repeat the previous step immediately after 5,10,15 minutes of total elapsed time. Mark collection times T5, T10 and Tf.

**Calculation**

Calculate Ratios of R=T1/T5, T1/Tf.
Estimate %P30 at selected times from following equation:

$$\%P30 = (1-R) \times 100$$

Estimate the SDI from following equation
SDI = %P30/Elapsed time (minutes).

**Results:**

| Day/time | 9am SDI | 10amSDI | 11am SDI | 12noon SDI | 1pm SDI | 2pm SDI |
|----------|---------|---------|----------|------------|---------|---------|
| 1 | 2.6 | 2.7 | 2.4 | 2.4 | 2.8 | 2.6 |
| 2 | 2.7 | 2,4 | 2.6 | 2.9 | 2.7 | 2.6 |
| 3 | 2.8 | 2.8 | 2.6 | 2.6 | 2.6 | 2.5 |
| 4 | 2.7 | 2.6 | 2.4 | 2.7 | 2.7 | 2.4 |
| 5 | 2.9 | 2.6 | 2.6 | 2.5 | 2.3 | 2.6 |
| 6 | 2.8 | 2.7 | 2.7 | 2.6 | 2.6 | 2.6 |
| 7 | 2.4 | 2.4 | 2.6 | 2.6 | 2.5 | 2.5 |
| 8 | 2.5 | 2.5 | 2.5 | 2.6 | 2.5 | 2.7 |
| 9 | 2.6 | 2.6 | 2.7 | 2.7 | 2.8 | 2.7 |
| SDI range :2.4-2.9 Mean: 2.60 | | | | | | |

The test results show consistency of performance in achieving an SDI of < 3 which will give site RO membranes low fouling.
It is important to note that there is no additional requirement for further treatment with, for example, chemicals and as such chemicals there are no disposal issues.

This clearly sets the Spruce Filter apart from other multimedia technologies and is a step change in performance for use in desalination. In addition, the longevity (>15 years) and superior flow rates of the Spruce Filter versus competing technologies provide significant cost and volume benefits. The Spruce Filter can achieve up 3x the amount of filtered water (up to 60m$^3$/m$^2$/hour at 30°C: higher filtration rate than sand anthracite) with a similar footprint to other multimedia filters. Moreover, the Spruce Filter™ (or more generally filter systems according to GB2369069 or GB2388557) have a low backwash volume as compared to sand/anthracite type filters - the backwash water being returned safely to the sea.

It should also be noted that the Spruce Filter™ is capable of reducing the turbidity of water to less than 0.1ntu.

The alternative technologies to the Spruce Filters are Dual Media filters supplemented with chemical treatments and Ultrafiltration membranes. Ultrafiltration membranes are significantly more expensive, require greater energy to run and have considerably shorter life span. Furthermore, the dual filters require significant levels of chemical treatment to stop media fouling and over the lifetime of a project, the amount of chemical processing can be large. Moreover, residual levels of chemicals left after chemical pre-treatment can lead to further fouling of RO membranes.

**Pre-treatment practices for Seawater Reverse Osmosis**

The purpose of this paper is to outline the current treatment practices available and their deficiencies in comparison to the Spruce Filter.

The alternative technologies to the Spruce Filter are:

1. Horizontal vessels with Sand & Anthracite dual media
2. Rapid Gravity Filtration with Sand & Anthracite dual media
3. Membrane microfiltration

Before we discuss each of the above practices in more detail, we provide the following commentary on the basic principles of filtration.

**Filtration.**

In filtration the raw water is passed through a medium such as sand or anthracite which act as a strainer, retaining the fine organic and inorganic material, allowing clean water to pass through. The action of filters is complex and in some types of filter biological action also takes place.

Sand filters are used in water treatment to remove the fine particles which cannot be economically removed by settling /sedimentation. Sand filters are effective in removing suspended solids and reducing particles down to 15microns without the addition of chemicals.

Mechanical straining of the water is only part of the filtration process as particles are retained by adsorption to the media through zeta potential.

Filtration in water treatment can be carried out using simple slow sand filters or as is more usual for flocculated water, rapid sand filters.

Slow sand filters have been replaced by RGF types, which are particularly effective for water treatment with the addition of chemical coagulants. The flow rate is much greater being typically 4-8m3/m2/hour; hence a smaller footprint.

Because of the high flow rate biodegradation does not take place in RGF. The filter is cleaned by backwashing at intervals of 24 - 48 hours and is controlled by head loss. RGF unlike slow sand does not produce water with low bacterial counts and requires disinfection. RGF systems can also be dual bed using anthracite and sand. This practice allows less clogging of the filter bed due to larger flocs adhering to the anthracite grains before being filtered by sand. This dual media practice will increase the flow rate and extend run times (this method is used by F.B.Leopold an ITT group company).

This method requires the addition of ferric salts -flow rates are 3-4 gpm/ft2 or 7.5-10m/hr and state that they can achieve SDI <3 as required by RO manufacturers. This is achieved by the combination of filtration and chemical addition.

Inlet SDI is typically 8-10 but can be up to 15.

**Summarising RGF**

**Advantages**

- Higher flow rate than slow sand
- Requires small area of land
- Is less sensitive to changes in raw water quality

**Disadvantages**

- RGF is not an adequate treatment on its own
- Generally ineffective against taste and odour
- Produces large volumes of sludge for disposal
- Requires ongoing investment in costly flocculation chemicals
- Little biodegradation, and high bacterial counts requires disinfection prior to RO
- Requires activated carbon or chemical addition to dechlorinate water prior to RO
- Silt in raw water can form mudballs and reduce filtration efficiency

**Dual Media Filtration.**

The use of anthracite with sand in granular media filters has been a practice used for over 50 years. The lower density of the anthracite allows coarser grains to remain stable on top of the finer grains of sand. This practice follows the ideals of the Kozeny equation in that a greater quantity of floc can be accommodated within the anthracite and other coarse media with a given head loss. An additional benefit of anthracite is a greater clean bed voidage of this media giving a higher dirt loading capacity. With the anthracite sitting above the sand finer particles may be removed and turbidities of 5ntu,s may be achieved. Because of the different specific gravities of the two materials (anthracite 1.4 sand 2.65) the coarser anthracite will always remain above the sand during the backwashing process.

In designing a dual media bed, it is desirable to select anthracite as coarse as possible for particle removal to prevent surface blinding, and to have the sand as fine as possible to provide maximum particle removal. However if the sand is too fine in relation to the anthracite, it will rise above the anthracite and remain there when the filter is in service.

| Dual Media | Typical Characteristics |
| --- | --- |
| Filtration Rate | 12-20m/hour |
| Backwash Rate | 20-30m/hour |
| Backwash duration | 15 minutes |
| Air Scouring rate | 0.3m3/m2/min |
| Air scour duration | 5 minutes |
| Maximum Suspended Solids | 100 mg/l |
| Typical Turbidity achieved | 5 ntu |
| Bed Depth | 0.46-0.61m Anthracite and0.2-0.3 m sand |
| Particle Size reduction to | 15 microns |

As can be seen from the above table dual media can only provide a filtered water turbidity of 5 ntu. This level is not good enough to be used within a SWRO plant and therefore the addition of chemicals is required.

**Addition of chemicals to improve Dual Media Filtration:**

To introduce chemical addition we can summarise as follows:

Most water borne contaminants carry a negative surface charge which stabilizes them causing electrostatic repulsion. This includes emulsified oil and grease, and finely divided solid suspensions. Inorganic coagulants and polymeric flocculants neutralise this charge which allows particles to come close together and destabilise the suspension.

8

**Inorganic Coagulants and Flocculants**

Inorganic coagulants are usually based on multivalent cations such as Iron (Ferric and Ferrous) and Aluminium salts. These positively charged molecules interact with negatively charged particles to assist in aggregation. Many of these chemicals, under the appropriate pH, temperature and salinity conditions, react with water to form insoluble hydroxides which, on precipitation, link together to form long chains or meshes, physically forming small particles into larger flocs. Van der Waals attraction (electrostatic charge) and polymeric coagulants complete the process, forming larger aggregates which can be further flocculated or separated from the waste stream by filtration.

**Commonly used coagulants include:**

Ferric Chloride $FeCl_3$, ferrous Chloride $FeCl_2$, ferric Sulphate $Fe_2(SO_4)_3$, Aluminium Sulphate $Al_2(SO_4)_3$ and Poly Aluminium Chloride (PAC).

**Organic Flocculants**

These are mainly linear and branched polymers with high molecular weight and variable charge densities. They are classified as Anionic, Cationic and Non ionic. Non ionic have no charge bearing groups and are typically homopolymers of acrylamide. Anionic polymers when dissolved in water are negatively charged and are usually copolymers of acrylamide and acrylic acid, sodium acrylate or other anionic monomer. They are pH sensitive and function above $pH^6$

Cationic polymers become positively charged when dissolved in water. They can be copolymers of acrylamide with cationic monomer. The cationic charge is derived from Nitrogen in the form of a secondary, tertiary or quaternary amine. Again pH sensitive and charge drops off at >6.0

In addition charged polymers (polyelectrolytes) can agglomerate the stabilised particles through a bridging mechanism.

In a typical treatment, a low molecular weight cationic polymer is often used in conjunction with an inorganic coagulant such as aluminium sulphate to generate "pinflocs" this is usually followed by the addition of high molecular weight anionic polymer generating bigger flocs. These larger flocs are removed by sedimentation followed by Dual Media filtration.

**Membrane Fouling (RO)**

When treating water with polymers, the most common type is polyacrylamide. This material is supplied as an emulsion in a carrier fluid which contains surfactants, oil and latex. The oil and latex can damage the RO membrane by forming a film on the membrane surface

Other fouling issues are:

1. Any soluble iron or aluminium in feed water that are naturally present or there due to an excess of coagulant. Flocculant dosing will oxidise to form iron or aluminium hydroxides and oxides on the membrane surface.
2. Aluminium or iron based coagulants that do not form flocs are not soluble and will form preflocs which attach to any surface and neutralise its charge. This includes dual media filters and membrane filters
3. Aluminium can react with low silica levels to form aluminium silicate which will foul membranes and can only be removed with acid treatment
4. It is a widely held opinion that the use of cationic polymers/flocculants can be (and is) detrimental to membrane operation. Consequently the water treatment service companies have been cautious about their use.
5. The fouled membranes have to be chemically cleaned and returned to site
6. Membrane manufacturers have listed their concerns on the internet
For example **Dow Chemicals say:**

Coagulants and flocculants may interfere with an RO membrane both indirectly or directly. Nearly all antiscalants are negatively charged and will react with cationic coagulants and flocculants present in the water.

7. The membranes in RO plants have been heavily fouled by a gel formed by the reaction between cationic polyelectrolytes and antiscalants.

The main technique for assessing membrane fouling is the **Silt Density Index:** Membrane manufacturers typically specify limits on Suspended Solids in terms of Turbidity or SDI. For example one membrane supplier strongly recommends turbidities of <0.2ntu and states that the maximum feed water turbidity is 1.0ntu. Typical SDI levels are <4. SD1 of 2.5 is measured to be equivalent to 0.5ntu by Hydranautics- a major membrane manufacturer

**Membrane Microfiltration**

Microfiltration is generally referred to the filtration at < 1 micron level. There are a variety of different types within the market.

The basic principle of microfiltration in water treatment include:

1. Sieving via physical straining utilizing pressure as a driving force
2. Typical pressures are 5-40ps with a recovery of 95-98%
3. Flux rate typically 0.6-3m/d
4. Pore structure is macroporous

Most commercial membranes are produced as flat sheets, fine hollow fibres or tubular form. The flat sheets are of two types: asymmetric and composite. Asymmetric membranes are cast in one process and consist of a very thin (<1 micron) layer and a thicker (up to 100microns) porous layer that adds support and is capable of a high water flux.

Composite membranes are made by bonding a thin cellulose acetate or polyamide active layer (0.15-0.25 micron) to a thicker porous substrate, providing stability. Fine hollow fibres for hollow fibre membranes were developed by using polyamide resins: the fibres are about 100microns and can be extruded through an orifice to produce hollow fibres.

Chemical conditioning of the feed water for SWRO is often required where enhanced organic removal, iron and manganese, is desired.

**Microfiltration**

Microfiltration is used to treat moderately turbid surface waters to produce potable water. In the USA the membrane industry continues to drive the use of membranes for all encompassing applications. Various reports have indicated that membranes for micro filtration work are flawed. Scaling and biofouling problems continue to plague microfiltration membranes when the membrane acts as the initial step for particle separation. Algal blooms in seawater create flow and fouling issues; the algae produce polysaccharides which block the macropores. A very significant study by the AWWA Membrane Technology Research Committee made a number of interesting remarks in a paper entitled:

*Recent Advances and Research Needs in Membranen Fouling.*

The papers authors are the world's premier research committee on the subject and their comments are as follows:

*Fouling occur as a result of scaling and biofouling. Biofouling is a major problem because it leads to higher operating pressures, the need for frequent Chemical cleaning, Membrane deterioration and compromised water quality. Cleaning techniques are not well established, Vibratory or ultrasonic cleaning can compromise polymeric materials.*

The paper concludes that a complete understanding of the fouling process itself is still lacking.

A second article in the AWWA journal by Howe & Clarke April 2006 focussed on the pre-treatment through the use of coagulation. This article is interesting in that it confirms the need for high dosages of coagulant to improve membrane performance. Dose rates as high as 30 - 200mgl of Aluminium Sulphate were required to improve membrane performance. Thus, if you intend to use membranes for Microfiltration in such applications as potable water treatment or pre-filtration and reverse osmosis applications expect to use high levels of chemistry.

Table 3:

| | | | | | | | | | | | | | |
|---|---|---|---|---|---|---|---|---|---|---|---|---|---|
| Like For Like Technology Comparison Based Around 200m3/Hr (56lps) | | | | | | | | | | | | | |
| | PRODUCT | TECHNOLOGY OWNER | MAX SOLIDS REMOVAL | FOOTPRINT (M2) | POWER | CHEM. REQ. | COST £ | AIR SCOURING | B/W WATER | HEIGHT (M) | MAXSS LOAD | CIVIL ENG REQT. |
| DESAL.PRETMT. | Spruce | Filter Clear | 0.2 micron | 4 | 15kW | no | 76,500.00 | no | 0.1-1% | 2.3 | 1000 | Plinth |
| | Dynasand | Hydro International (UK) | 5-10 micron | 25 | 15kW (Air)+pump 80kW | yes | 144,000.00 | yes | 5-10% | 4 | 50 | Concrete tanks |
| | Tetrafilter | Severn Trent | 5-10 micron | 86 | 40kW | yes | 121,250.00 | yes | 5% | 4 | 200 | Concrete tanks |
| DESAL.PRETMT. | Dual Media | Veolia | 20 micron | 24 | 38kW | yes | 101,434.00 | yes | 10-15% | 4.3 | 100 | plinth |
| | Micro-strainer | Veolia | 30 micron | 2X2X2 | 10kW | no | 100,000.00 | no | 0.1-3% | below ground | 20 | Concrete hole |

**Claims**

1. Use of a water treatment system comprising a filter bed comprising layers of inert particulate material, wherein:

the first, top layer of particulate material comprises particles with a density in the range of 1.25 to 1.55 g/cc and within the size range of 1.6 to 2.5 mm;
the second layer of particulate material comprises particles with a density in the range of 2.35 to 2.95 g/cc and within the size range of 0.5 to 0.85 mm;
the third layer of particulate material comprises particles with a density in the range of 3.5 to 4.3 g/cc and within the size range of 0.2 to 0.6 mm; and
the fourth, bottom layer of particulate material comprises particles with a density in the range of 4.0 to 6.0 g/cc and within the size range of 0.2 to 0.5 mm; for pre-treating water to be subjected to a process comprising reverse osmosis.

2. The use of claim 1, wherein the SDI of water treated by the water treatment system is less than 5.

3. The use of claim 1, wherein the operational efficiency, yield and/or longevity of the reverse osmosis system or the membranes thereof, is improved relative to a reverse osmosis system not fed with water treated by said water treatment system.

4. The use of any preceding claim, wherein the particle size and density of the particulate material forming each layer is such that the free fall settling rate of the particles decreases from the top layer downwards.

5. The use of claims 1-4, wherein the particles of which the first layer is composed have a density in the range of 1.35 to 1.47 g/cc; the particles of which the second layer is composed have a density in the range of 2.6 to 2.8 g/cc; the particles of which the third layer is composed have a density in the range of 3.7 to 4.1 g/cc; and the particles of which the fourth layer is composed have a density in the range of 4.7 to 5.2 g/cc.

6. The use of claims 1-4, wherein the particles of which the first layer is composed have a particle size within the range 1.7 to 2.4 mm; the particles of which the second layer is composed have a particle size within the range 0.6 to 0.85 mm; the particles of which the third layer is composed have a particle size within the range 0.4 to 0.5 mm; and the particles of which the fourth layer is composed have a particle size within the range 0.3 to 0.4 mm.

7. The use of claims 1-6, wherein the particulate material forming the first layer is selected from the group comprising anthracite, glass, cinders, activated carbon and mixtures of two or more of these materials.

8. The use of claims 1-7, wherein the particulate material forming the second layer is selected from the group comprising crushed flint, silica, quartz and mixtures of two or more of these materials.

9. The use of claims 1-8, wherein the particulate material forming the third layer is selected from garnet, alumina, stone, granite, brick, porcelain and mixtures of two or more of these materials.

10. The use of claims 1-9, wherein the particulate material forming the fourth layer may be magnetite and/or ilmenite.

**Patentansprüche**

1. Verwendung eines Wasserbehandlungssystems, umfassend ein Filterbett, umfassend Lagen inerten partikelförmigen Materials, wobei:

die erste, obere Lage partikelförmigen Materials Partikel mit einer Dichte im Bereich von 1,25 bis 1,55 g/cm$^3$ und innerhalb des Größenbereichs von 1,6 bis 2,5 mm umfasst;
die zweite Lage partikelförmigen Materials Partikel mit einer Dichte im Bereich von 2,35 bis 2,95 g/cm$^3$ und innerhalb des Größenbereichs von 0,5 bis 0,85 mm umfasst;
die dritte Lage partikelförmigen Materials Partikel mit einer Dichte im Bereich von 3,5 bis 4,3 g/cm$^3$ und innerhalb des Größenbereichs von 0,2 bis 0,6 mm umfasst; und
die vierte, untere Lage partikelförmigen Materials Partikel mit einer Dichte im Bereich von 4,0 bis 6,0 g/cm$^3$ und innerhalb des Größenbereichs von 0,2 bis 0,5 mm umfasst;

zur Vorbehandlung von Wasser, das einem Umkehrosmose umfassenden Verfahren unterzogen werden soll.

2. Verwendung nach Anspruch 1, wobei der SDI von durch das Wasserbehandlungssystem behandeltem Wasser niedriger als 5 ist.

3. Verwendung nach Anspruch 1, wobei die Betriebseffizienz, Ausbeute und/oder Langlebigkeit des Umkehrosmosesystems oder der Membranen desselben, bezogen auf ein Umkehrosmosesystem, das nicht mit durch das Wasserbehandlungssystem behandeltem Wasser gespeist wird, verbessert ist bzw. sind.

4. Verwendung nach einem der vorstehenden Ansprüche, wobei die Partikelgröße und die Dichte des partikelförmigen Materials, das jede Lage bildet, so sind, dass die Freier-Fall-Sinkrate der Partikel von der oberen Lage nach unten abnimmt.

5. Verwendung nach den Ansprüchen 1-4, wobei die Partikel, aus denen die erste Lage besteht, eine Dichte im Bereich von 1,35 bis 1,47 g/cm$^3$ aufweisen; die Partikel, aus denen die zweite Lage besteht, eine Dichte im Bereich von 2,6 bis 2,8 g/cm$^3$ aufweisen; die Partikel, aus denen die dritte Lage besteht, eine Dichte im Bereich von 3,7 bis 4,1 g/cm$^3$ aufweisen; und die Partikel, aus denen die vierte Lage besteht, eine Dichte im Bereich von 4,7 bis 5,2 g/cm$^3$ aufweisen.

6. Verwendung nach den Ansprüchen 1-4, wobei die Partikel, aus denen die erste Lage besteht, eine Partikelgröße innerhalb des Bereichs von 1,7 bis 2,4 mm aufweisen; die Partikel, aus denen die zweite Lage besteht, eine Partikelgröße innerhalb des Bereichs von 0,6 bis 0,85 mm aufweisen; die Partikel, aus denen die dritte Lage besteht, eine Partikelgröße innerhalb des Bereichs von 0,4 bis 0,5 mm aufweisen; und die Partikel, aus denen die vierte Lage besteht, eine Partikelgröße innerhalb des Bereichs von 0,3 bis 0,4 mm aufweisen.

7. Verwendung nach den Ansprüchen 1-6, wobei das partikelförmige Material, das die erste Lage bildet, aus der Gruppe ausgewählt ist, die Anthrazit, Glas, Schlacke, Aktivkohle und Gemische aus zwei oder mehr dieser Materialien umfasst.

8. Verwendung nach den Ansprüchen 1-7, wobei das partikelförmige Material, das die zweite Lage bildet, aus der Gruppe ausgewählt ist, die zerkleinerten Feuerstein, Kieselsäure, Quarz und Gemische aus zwei oder mehr dieser Materialien umfasst.

9. Verwendung nach den Ansprüchen 1-8, wobei das partikelförmige Material, das die dritte Lage bildet, aus Granat, Aluminiumoxid, Stein, Granit, Ziegel, Porzellan und Gemischen aus zwei oder mehr dieser Materialien ausgewählt ist.

10. Verwendung nach den Ansprüchen 1-9, wobei das partikelförmige Material, das die vierte Lage bildet, Magnetit und/oder Ilmenit sein kann.

**Revendications**

1. Utilisation d'un système de traitement d'eau comprenant un lit filtrant comprenant des couches de matière particulaire inerte, dans laquelle :

   la première couche, supérieure, de matière particulaire comprend des particules présentant une densité comprise dans la plage de 1,25 à 1,55 g/cm$^3$ et se situant dans la plage de dimensions de 1,6 à 2,5 mm ;
   la deuxième couche de matière particulaire comprend des particules présentant une densité comprise dans la plage de 2,35 à 2,95 g/cm$^3$ et se situant dans la plage de dimensions de 0,5 à 0,85 mm ;
   la troisième couche de matière particulaire comprend des particules présentant une densité comprise dans la plage de 3,5 à 4,3 g/cm$^3$ et se situant dans la plage de dimensions de 0,2 à 0,6 mm ; et
   la quatrième couche, inférieure, de matière particulaire comprend des particules présentant une densité comprise dans la plage de 4,0 à 6,0 g/cm$^3$ et se situant dans la plage de dimensions de 0,2 à 0,5 mm ; afin de prétraiter de l'eau devant être soumise à un procédé comprenant une osmose inverse.

2. Utilisation selon la revendication 1, dans laquelle l'indice de densité des boues (IDB) de l'eau traitée par le système de traitement d'eau est inférieur à 5.

**3.** Utilisation selon la revendication 1, dans laquelle l'efficacité opérationnelle, le rendement et/ou la longévité du système d'osmose inverse ou des membranes de celui-ci, est/sont amélioré(e)(s) par rapport à un système d'osmose inverse non alimenté avec de l'eau traitée grâce audit système de traitement d'eau.

**4.** Utilisation selon l'une quelconque des revendications précédentes, dans laquelle la dimension de particule et la densité de la matière particulaire formant chaque couche est telle que la vitesse de sédimentation libre des particules diminue vers le bas en partant de la couche supérieure.

**5.** Utilisation selon les revendications 1 à 4, dans laquelle les particules dont est composée la première couche présentent une densité comprise dans la plage de 1,35 à 1,47 g/cm$^3$ ; les particules dont est composée la deuxième couche présentent une densité comprise dans la plage de 2,6 à 2,8 g/cm$^3$ ; les particules dont est composée la troisième couche présentent une densité comprise dans la plage de 3,7 à 4,1 g/cm$^3$ ; et les particules dont est composée la quatrième couche présentent une densité comprise dans la plage de 4,7 à 5,2 g/cm$^3$.

**6.** Utilisation selon les revendications 1 à 4, dans laquelle les particules dont est composée la première couche présentent une dimension de particule comprise dans la plage de 1,7 à 2,4 mm ; les particules dont est composée la deuxième couche présentent une dimension de particule comprise dans la plage de 0,6 à 0,85 mm ; les particules dont est composée la troisième couche présentent une dimension de particule comprise dans la plage de 0,4 à 0,5 mm ; et les particules dont est composée la quatrième couche présentent une taille de particule comprise dans la plage de 0,3 à 0,4 mm.

**7.** Utilisation selon les revendications 1 à 6, dans laquelle la matière particulaire formant la première couche est sélectionnée parmi le groupe comprenant l'anthracite, le verre, les scories, le charbon actif et des mélanges de deux ou plus de deux parmi ces matériaux.

**8.** Utilisation selon les revendications 1 à 7, dans laquelle la matière particulaire formant la deuxième couche est sélectionnée parmi le groupe comprenant le silex broyé, la silice, le quartz et des mélanges de deux ou plus de deux parmi ces matériaux.

**9.** Utilisation selon les revendications 1 à 8, dans laquelle la matière particulaire formant la troisième couche est sélectionnée parmi le grenat, l'oxyde d'aluminium, la pierre, le granite, la brique, la porcelaine et des mélanges de deux ou plus de deux parmi ces matériaux.

**10.** Utilisation selon les revendications 1 à 9, dans laquelle la matière particulaire formant la quatrième couche peut être de la magnétite et/ou de l'ilménite.

Figure 1

EP 2 485 981 B1

Loch Ascog WTW Performance trial: Raw Water Conditioning Filter.

Figure 2

EP 2 485 981 B1

Figure 3

Loch Ascog WTW Performance trial: Raw Water Conditioning Filter.

Figure 4

Loch Ascog WTW Performance trial: Raw Water Conditioning Filter.

Figure 5

Figure 6

EP 2 485 981 B1

Loch Ascog WTW Performance trial: Raw Water Conditioning Filter.

Figure 7

Date

EP 2 485 981 B1

Loch Ascog WTW Performance trial: Raw Water Conditioning Filter.

Figure 8

Date

% Manganese Reduction

1st Stage
Spruce

EP 2 485 981 B1

Figure 9

Loch Ascog WTW Performance trial: Raw Water Conditioning Filter.

Figure 10

EP 2 485 981 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4747945 A, Kreusch
- GB 2369069 A
- GB 2388557 A

**Non-patent literature cited in the description**

- **HOWE & CLARKE.** *AWWA journal,* April 2006